(19) Europäisches Patentamt
European Patent Office
Office européen des brevets

(11) **EP 4 546 448 A1**

(12) **EUROPEAN PATENT APPLICATION**
published in accordance with Art. 153(4) EPC

(43) Date of publication:
**30.04.2025 Bulletin 2025/18**

(21) Application number: **23912863.0**

(22) Date of filing: **26.12.2023**

(51) International Patent Classification (IPC):
*H01M 4/134* (2010.01)     *H01M 4/38* (2006.01)
*H01M 4/48* (2010.01)      *H01M 4/587* (2010.01)
*H01M 4/36* (2006.01)      *H01M 4/525* (2010.01)
*H01M 4/505* (2010.01)     *H01M 4/58* (2010.01)
*H01M 4/131* (2010.01)     *H01M 4/133* (2010.01)

(52) Cooperative Patent Classification (CPC):
H01M 4/131; H01M 4/133; H01M 4/134;
H01M 4/36; H01M 4/38; H01M 4/48; H01M 4/505;
H01M 4/525; H01M 4/58; H01M 4/587; Y02E 60/10

(86) International application number:
**PCT/KR2023/021552**

(87) International publication number:
**WO 2024/144188 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022  KR 20220186055
27.12.2022  KR 20220186066
22.12.2023  KR 20230189551**

(71) Applicant: **LG Energy Solution, Ltd.
Seoul 07335 (KR)**

(72) Inventors:
• **PARK, Seungwon
Daejeon 34122 (KR)**
• **HONG, Yeon Suk
Daejeon 34122 (KR)**

(74) Representative: **Hoffmann Eitle
Patent- und Rechtsanwälte PartmbB
Arabellastraße 30
81925 München (DE)**

(54) **LITHIUM SECONDARY BATTERY**

(57) The present application relates to a lithium secondary battery.

[Figure 1]

EP 4 546 448 A1

**Description**

[Technical Field]

The present application claims priority to and the benefit of Korean Patent Application Nos. 10-2022-0186055 and 10-2022-0186066 filed in the Korean Intellectual Property Office on December 27, 2022, the entire contents of which are incorporated herein by reference.
The present application relates to a lithium secondary battery.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.
At present, a secondary battery is a representative example of an electrochemical device that utilizes such electrochemical energy, and the range of use thereof tends to be gradually expanding.
Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.
In general, a secondary battery includes a positive electrode, a negative electrode, an electrolyte, and a separator. The negative electrode includes a negative electrode active material for intercalating and deintercalating lithium ions coming from the positive electrode. As a negative electrode material, carbon-based materials such as graphite are excellent in stability and reversibility, but have a limitation in terms of capacity. Therefore, in fields for the purpose of high capacity, attempts to use Si-based materials with high theoretical capacity as the negative electrode material are increasing.
That is, a lithium secondary battery is usually manufactured by using a lithium-intercalated compound, such as $LiCoO_2$ or $LiMn_2O_4$ for the positive electrode, and a lithium-not-intercalated material, such as a carbon-based or Si-based material for the negative electrode. During charging, the lithium ions intercalated to the positive electrode move to the negative electrode through the electrolyte. During discharging, the lithium ions move back to the positive electrode from the negative electrode. During charging, lithium moving from the positive electrode to the negative electrode reacts with the electrolyte to form a kind of passivation film, that is, a solid electrolyte interface (SEI) on a surface of the negative electrode. The SEI inhibits migration of electrons required for the reaction of the negative electrode with the electrolyte to prevent decomposition of the electrolyte, thereby stabilizing a structure of the negative electrode. On the other hand, formation of the SEI is irreversible to cause consumption of lithium ions. That is, the lithium consumed due to the formation of SEI does not return to the positive electrode during the subsequent discharging process, resulting in a reduction in capacity of the battery.
On the other hand, as an effort for improving the performance of the lithium secondary battery, it is needed to develop a technology for accelerating a charging rate. In order to rapidly charge a lithium secondary battery, a migration rate of lithium ions should be fast during the intercalation process of lithium ions into the negative electrode. Therefore, a battery design is being made to reduce a diffusion distance of lithium by forming a negative electrode active material layer to have a thickness at a level of a thin film, and to achieve high output by reducing internal resistance by forming a carbon-coated layer on a surface of the negative electrode active material layer to increase conductivity.
In order to ensure such rapid charging performance and energy density, there are increasing attempts to use silicon-based negative electrodes instead of existing carbon-based (graphite) negative electrodes. That is, in order to improve the performance, the content of the silicon-based active material should be increased in the silicon-based negative electrode. However, if the content of the silicon-based negative electrode is simply increased, various problems such as resistance and volume expansion occur.
Regarding the above problems, the resistance problem can be solved by increasing the content of the silicon-based active material and simultaneously applying a secondary particle positive electrode active material to the positive electrode. However, a reaction potential of the silicon-based negative electrode is about 0.05 V higher than that of the carbon-based negative electrode, so the silicon-based negative electrode is exposed to high potential. In addition, as cracking occurs at high voltages, the problem of gas generation occurs again. Accordingly, research was conducted on applying a single-particle positive electrode active material as a positive electrode active material. However, when the single-particle positive electrode active material is used alone, the negative electrode no longer functions due to the increased use of the bottom of the silicon-based negative electrode, resulting in poor cycle characteristics.
Ultimately, regarding lithium secondary batteries that use a silicon-based negative electrode for achieving capacity characteristics, high energy density, and rapid charging performance and use an NCMA-based or NCM-based positive electrode as a counter electrode, it is needed to continuously conduct research on a lithium secondary battery that can reduce a resistance difference and solve active material cracking and gas generation issues in a high-voltage cell.

Prior Art Document

(Patent Literature 1) Japanese Patent Application Publication No. 2009-080971

[Detailed Description of the Invention]

[Technical Problem]

As a result of research on the aforementioned problems, it was found that the capacity characteristics and rapid charging performance can be secured by using a silicon-based negative electrode, and the amount of gas generation can be controlled when a single-particle positive electrode active material is used as the positive electrode. In particular, it was found that the aforementioned problems can be addressed when a single-particle positive electrode active material is mixed with a secondary particle positive electrode active material rather than the single-particle positive electrode active material being included alone and a weight ratio of the silicon-based active material and the single-particle active material is adjusted compared to a capacity loading amount of a positive electrode.

Accordingly, the present application relates to a lithium secondary battery including a silicon-based negative electrode and a positive electrode including a specific content of a single-particle positive electrode active material.

[Technical Solution]

An exemplary embodiment of the present specification provides a lithium secondary battery including a positive electrode; a silicon-based negative electrode; a separator provided between the positive electrode and the negative electrode; and an electrolyte, wherein the positive electrode includes a positive electrode current collector layer and a positive electrode active material layer including a positive electrode active material layer composition provided on one surface or both surfaces of the positive electrode current collector layer, wherein the silicon-based negative electrode includes a negative electrode current collector layer and a negative electrode active material layer including a negative electrode active material layer composition provided on one surface or both surfaces of the negative electrode current collector layer, wherein the negative electrode active material layer composition includes a silicon-based active material, and the silicon-based active material includes one or more selected from the group consisting of SiOx (x=0), SiOx (0<x<2), SiC, and a Si alloy, wherein the positive electrode active material layer composition includes a positive electrode active material including one or more selected from the group consisting of a secondary particle positive electrode active material and a single-particle positive electrode active material, wherein the positive electrode active material includes one or more selected from the group consisting of nickel, cobalt, manganese, and aluminum, and includes 50 mol% or more of nickel in all metals except lithium, wherein the single-particle positive electrode active material is included in an amount of 1 part by weight or more and 50 parts by weight or less based on 100 parts by weight of the positive electrode active material, wherein a capacity loading amount of the positive electrode active material layer composition is 2 mAh/cm$^2$ or more and 5 mAh/cm$^2$ or less, and wherein the single-particle positive electrode active material is included in an amount of 0.01 part by weight or more and 4 parts by weight or less based on 100 parts by weight of the silicon-based active material.

[Advantageous Effects]

The lithium secondary battery according to the present application can enable a battery with high capacity and high energy density to be ensured by using the silicon-based negative electrode, and can also ensure rapid charging performance by using the silicon-based active material with excellent capacity characteristics to form a negative electrode thickness at a level of a thin film.

As the positive electrode, which is a counter electrode used in this case, the lithium secondary battery according to the present application uses a mixture of the secondary particle positive electrode active material and the single-particle positive electrode active material in the positive electrode, and at this time, adjusts the ratio of the single-particle positive electrode active material. In particular, the secondary battery according to the present application has a feature of adjusting the weight ratio of the silicon-based active material of the silicon-based negative electrode used as a counter electrode and the single-particle positive electrode active material compared to the capacity loading amount of the positive electrode active material layer composition.

Accordingly, the main feature of the present application is to optimize the composition and content of the positive electrode used as a counter electrode to the silicon-based negative electrode, which can solve the resistance problem in lithium secondary batteries, can reduce the cracking in high-voltage cells compared to the positive electrode to which the secondary particle is applied alone, and can also solve the issue of gas generation compared to the positive electrode to which the single-particle is applied alone.

[Brief Description of Drawings]

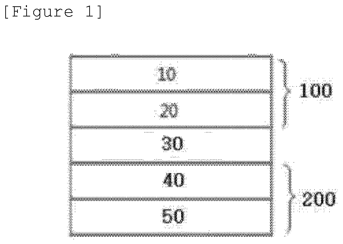

FIG. 1 shows a lithium secondary battery according to the present application.

<Explanation of Reference Numerals and Symbols>

    10: negative electrode current collector layer
    20: negative electrode active material layer
    30: separator
    40: positive electrode active material layer
    50: positive electrode current collector layer
    100: negative electrode
    200: positive electrode

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In the present specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" means a particle size distribution, and means a particle diameter at the n% point in the cumulative distribution of the number of particles according to the particle diameter. That is, D50 is a particle diameter at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a lithium secondary battery including a positive electrode; a silicon-based negative electrode; a separator provided between the positive electrode and the negative electrode; and an electrolyte, wherein the positive electrode includes a positive electrode current collector layer and a positive electrode active material layer including a positive electrode active material layer composition provided on one surface or both surfaces of the positive electrode current collector layer, wherein the silicon-based negative electrode includes a negative electrode current collector layer and a negative electrode active material layer including a negative electrode active material layer composition provided on one surface or both surfaces of the negative electrode current collector layer, wherein the negative electrode active material layer composition includes a silicon-based active material, and the silicon-based active material includes one or more selected from the group consisting of SiOx (x=0), SiOx (0<x<2), SiC, and a Si alloy, wherein the positive electrode active material layer composition includes a positive electrode active material including one or more selected from the group consisting of a secondary particle positive electrode active material and a single-particle positive electrode active material, wherein the positive electrode active material includes one or more selected from the group consisting of nickel, cobalt, manganese, and aluminum, and includes 50 mol% or more of nickel in all metals except lithium, wherein the single-particle positive electrode active material is included in an amount of 1 part by weight or more and 50 parts by weight or less based on 100 parts by weight of the positive electrode active material, wherein a capacity loading amount of the positive electrode active material layer composition is 2 mAh/cm$^2$ or more and 5 mAh/cm$^2$, and wherein the single-particle positive electrode active material is included in an amount of 0.01 part by weight or more and 4 parts by weight or less based on 100 parts by weight of the silicon-based active material.

As the positive electrode, which is a counter electrode used in the present application, the lithium secondary battery according to the present application uses a mixture of the secondary particle positive electrode active material and the single-particle positive electrode active material in the positive electrode, and at this time, adjusts the ratio of the single-particle positive electrode active material. In particular, the secondary battery according to the present application has a feature of adjusting the weight ratio of the silicon-based active material of the silicon-based negative electrode used as a counter electrode and the single-particle positive electrode active material compared to the capacity loading amount of the positive electrode active material layer composition.

Accordingly, the main feature of the present application is to optimize the composition and content of the positive electrode used as a counter electrode to the silicon-based negative electrode, which can solve the resistance problem in lithium secondary batteries, can reduce the cracking in high-voltage cells compared to the positive electrode to which the secondary particle is applied alone, and can also solve the issue of gas generation compared to the positive electrode to which the single-particle is applied alone.

FIG. 1 is a view showing a stack structure of a lithium secondary battery according to an exemplary embodiment of the present application. Specifically, a negative electrode 100 including a negative electrode active material layer 20 on one surface of a negative electrode current collector layer 10 can be seen, a positive electrode 200 including a positive electrode active material layer 40 on one surface of a positive electrode current collector layer 50 can be seen, and the negative electrode 100 and the positive electrode 200 for a lithium secondary battery are formed in a stack structure with a separator 30 interposed therebetween.

Below, the positive electrode, negative electrode, electrolyte, and separator included in the lithium secondary battery will be described, respectively.

According to the present application, the silicon-based negative electrode may include a negative electrode current collector layer, and a negative electrode active material layer including a negative electrode active material layer composition provided on one surface or both surfaces of the negative electrode current collector layer.

The negative electrode current collector layer generally has a thickness of 1 μm to 100 μm. Such a negative electrode current collector is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a bonding force of the negative electrode active material, and may be used in various forms such as a film, a sheet, a foil, a net, a porous body, a foamed body, or a non-woven fabric body.

However, the thickness may be variously modified depending on a type and a use of negative electrode used, and is not limited thereto.

In an exemplary embodiment of the present application, the negative electrode active material layer may include a negative electrode active material layer composition, and the negative electrode active material layer composition may include a silicon-based active material.

In an exemplary embodiment of the present application, the negative electrode active material layer may include a negative electrode active material layer composition, and the negative electrode active material layer composition may include one or more selected from the group consisting of a silicon-based active material, a negative electrode conductive material, and a negative electrode binder.

In an exemplary embodiment of the present application, the negative electrode active material layer may include a negative electrode active material layer composition, and the negative electrode active material layer composition may include a silicon-based active material; a negative electrode conductive material; and a negative electrode binder.

In an exemplary embodiment of the present application, the silicon-based active material may include one or more selected from the group consisting of SiOx (x=0), SiOx (0<x<2), SiC, and a Si alloy.

In an exemplary embodiment of the present application, the silicon-based active material may include one or more selected from the group consisting of SiOx (x=0), SiOx (0<x≤ 2) and a metal impurity, and may include 70 parts by weight or more of SiOx (x=0) based on 100 parts by weight of the silicon-based active material.

In another exemplary embodiment, SiOx (x = 0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less based on 100 parts by weight of the silicon-based active material.

In an exemplary embodiment of the present application, for the silicon-based active material, pure silicon (Si) may be particularly used as the silicon-based active material. The use of pure silicon (Si) as the silicon-based active material may mean that, based on 100 parts by weight of the total silicon-based active material as described above, pure Si particles (SiOx (x=0)) not bonded to other particles or elements are included within the above range.

Note that an average particle diameter (D50) of the silicon-based active material of the present invention may be 5 $\mu$m to 10 $\mu$m, specifically 5.5 $\mu$m to 8 $\mu$m, and more specifically 6 $\mu$m to 7 $\mu$m. If the average particle diameter is less than 5 $\mu$m, the specific surface area of the particle increases excessively, causing the viscosity of the negative electrode slurry to increase excessively. Accordingly, the particles constituting the negative electrode slurry are not smoothly dispersed. In addition, if the size of the silicon-based active material is excessively small, a contact area between the silicon particles and the conductive material is reduced due to the composite consisting of the conductive material and the binder in the negative electrode slurry, so that a disconnection possibility of the conductive network increases, thereby lowering the capacity retention rate. On the other hand, if the average particle diameter is greater than 10 $\mu$m, excessively large silicon particles are present, so that the surface of the negative electrode is not smooth, causing current density unevenness during charging and discharging. Additionally, if the silicon particles are excessively large, the phase stability of the negative electrode slurry becomes unstable, deteriorating processability. As a result, the capacity retention rate of the battery decreases.

In an exemplary embodiment of the present application, the silicon-based active material generally has a characteristic BET surface area. The BET surface area of the silicon-based active material is preferably 0.01 m$^2$/g to 150.0 m$^2$/g, more preferably 0.1 m$^2$/g to 100.0 m$^2$/g, particularly preferably 0.2 m$^2$/g to 80.0 m$^2$/g, and most preferably 0.2 m$^2$/g to 18.0 m$^2$/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or fragment-shaped particles. Alternatively, but less preferably, the silicon particles may also have a fiber structure or be present in the form of a silicon-containing film or coating.

In an exemplary embodiment of the present application, the silicon-based active material may be included in an amount of 60 parts by weight or more based on 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less based on 100 parts by weight of the negative electrode active material layer composition.

The negative electrode active material layer composition according to the present application uses the specific negative electrode conductive material and negative electrode binder capable of controlling the volume expansion rate during charging and discharging even when the silicon-based active material having a significantly high capacity is used within the above range. Accordingly, even when the silicon-based active material is within the above range, the negative electrode active material layer composition does not degrade the performance of the negative electrode and has excellent output characteristics in charging and discharging.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation 1 below, in which A is an area and P is a boundary line.

[Formula 1]

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Therefore, in an exemplary embodiment of the present application, the negative electrode active material layer composition may include a negative electrode conductive material and a negative electrode binder. That is, the negative electrode conductive material plays a role in securing a conductive path, and the binder plays a role in holding the negative electrode conductive material during charging and discharging.

In an exemplary embodiment of the present application, the negative electrode conductive material may include one or more selected from the group consisting of a point-like conductive material, a planar conductive material and a linear conductive material.

In an exemplary embodiment of the present application, the point-like conductive material refers to a conductive material that may be used for improving conductivity of the negative electrode, forms conductivity without causing a chemical change and has a circular or point shape. Specifically, the point-like conductive material may be one or more selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the point-like conductive material may have a BET specific surface area of 40 $m^2$/g or greater and 70 $m^2$/g or less, preferably 45 $m^2$/g or greater and 65 $m^2$/g or less, and more preferably 50 $m^2$/g or greater and 60 $m^2$/g or less. In an exemplary embodiment of the present application, a particle diameter of the point-like conductive material may be 10 nm to 100 nm, preferably 20 nm to 90 nm, and more preferably 40 nm to 60 nm.

In an exemplary embodiment of the present application, the conductive material may include a planar conductive material.

The planar conductive material refers to a conductive material that improves conductivity by increasing surface contact between silicon particles in the negative electrode and at the same time serves to suppress disconnection of the conductive path due to the volume expansion. The planar conductive material may be expressed as a plate-like conductive material or a bulk-type conductive material.

In an exemplary embodiment of the present application, the planar conductive material may include one or more selected from the group consisting of plate-like graphite, graphene, graphene oxide, and graphite flake, and preferably may be plate-like graphite.

In an exemplary embodiment of the present application, an average particle diameter (D50) of the planar conductive material may be 2 $\mu$m to 7 $\mu$m, specifically 3 $\mu$m to 6 $\mu$m, and more specifically 4 $\mu$m to 5 $\mu$m. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 $\mu$m or greater and 1.5 $\mu$m or less, D50 of 4.0 $\mu$m or greater and 5.0 $\mu$m or less, and D90 of 7.0 $\mu$m or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 1 $m^2$/g or greater.

In another exemplary embodiment, the planar conductive material may have a BET specific surface area of 1 $m^2$/g or greater and 500 $m^2$/g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 250 $m^2$/g or less.

In another exemplary embodiment, the planar conductive material is a planar conductive material with a low specific surface area, and the BET specific surface area may satisfy a range of 1 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may include a linear conductive material and the linear conductive material may be carbon nanotubes.

In an exemplary embodiment of the present application, the carbon nanotubes may be SWCNT or/and MWCNT. When the linear conductive material is SWCNT, a length of the SWCNT may be 0.5 $\mu$m to 100 $\mu$m, and preferably 1 $\mu$m to 80 $\mu$m.

In an exemplary embodiment of the present application, the negative electrode conductive material may be included in an amount of 5 parts by weight or more and 40 parts by weight or less based on 100 parts by weight of the negative electrode active material layer composition.

In another exemplary embodiment, the negative electrode conductive material may be included in an amount of 5 parts by weight or more and 40 parts by weight or less, preferably 5 parts by weight or more and 30 parts by weight or less, and more preferably 5 parts by weight or more and 25 parts by weight or less based on 100 parts by weight of the negative electrode active material layer composition.

In an exemplary embodiment of the present application, the negative electrode conductive material may include a planar conductive material and a linear conductive material, and a ratio of the planar conductive material to the linear conductive material may satisfy 1:0.001 to 1:0.3.

In an exemplary embodiment of the present application, as the negative electrode conductive material includes the planar conductive material and the linear conductive material and the composition and ratio described above are satisfied, respectively, the life characteristics of an existing lithium secondary battery are not significantly affected, and the number of points where the battery can be charged and discharged increases, so that output characteristics are excellent at a high C-rate.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, the plate-like conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or point-like shape and used so as to facilitate storage and release of lithium ions.

On the other hand, the plate-like conductive material that is used as the negative electrode conductive material is a material having a planar or plate-like shape, and may be expressed as plate-like graphite. That is, the plate-like conductive material is a material that is included in order to maintain a conductive path in the negative electrode active material layer, and refers to a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high-capacity characteristics with respect to storing and releasing lithium, and serves to store and release all lithium ions transferred from the positive electrode.

On the other hand, in the present application, the use of a carbon-based active material as an active material means that the carbon-based active material is processed into a point-like or spherical shape and used as a material for storing or releasing lithium.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the silicon-based active material and the negative electrode conductive material in order to prevent distortion and structural deformation of the negative electrode structure when the volume of the silicon-based active material expands and relaxes. When such roles are satisfied, all of the general negative electrode binders can be applied. Specifically, an aqueous binder may be used, and more specifically, a PAM-based binder may be used.

In an exemplary embodiment of the present application, the negative electrode binder may be included in an amount of 30 parts by weight or less, preferably 25 parts by weight or less, more preferably 20 parts by weight or less, and 5 parts by weight or more, and 8 parts by weight or more based on 100 parts by weight of the negative electrode active material layer composition.

Compared to existing carbon-based negative electrodes, when a Si-based negative electrode is used, an aqueous binder is applied in parts by weight described above, allowing the use of a point-like conductive material with a low functional group content. In addition, the above characteristics allows the point-like conductive material to have hydrophobicity and the excellent bond strength between the conductive material/binder.

In an exemplary embodiment of the present application, the silicon-based negative electrode may be formed by coating a negative electrode slurry including the negative electrode active material layer composition on one surface or both surfaces of the negative electrode current collector layer.

In an exemplary embodiment of the present application, the negative electrode slurry may include a negative electrode active material layer composition and a slurry solvent.

In an exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition based on 100 parts by weight of the negative electrode slurry.

When the solid content of the negative electrode slurry satisfies the above range, the viscosity is appropriate during formation of the negative electrode active material layer, so that particle agglomeration of the negative electrode composition is minimized to efficiently form the negative electrode active material layer.

In an exemplary embodiment of the present application, the slurry solvent may be used without limitation as long as it can disperse the negative electrode composition described above, and specifically, water or NMP may be used.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, the conductive material, and the binder included in the negative electrode active material layer, and in particular, satisfies the range described above when the silicon-based active material and the conductive material are included in the specific compositions and contents according to the present application, so that the electrode has electric conductivity and resistance within appropriate ranges.

In an exemplary embodiment of the present application, the positive electrode includes a positive electrode current collector layer and a positive electrode active material layer including a positive electrode active material layer composition provided on one surface or both surfaces of the positive electrode current collector layer.

In an exemplary embodiment of the present application, the positive electrode active material layer may include a positive electrode active material layer composition, and the positive electrode active material layer composition may include one or more selected from the group consisting of a positive electrode active material including one or more selected from the group consisting of a secondary particle positive electrode active material and a single-particle positive electrode active material, a positive electrode conductive material, and a positive electrode binder.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 1 to 500 $\mu$m, and a surface of the positive electrode current collector layer may be formed with microscopic irregularities to enhance adhesive force with the positive electrode active material. For example, the positive electrode current collector layer may be used in various forms such as a film, a sheet, a foil, a net, a porous body, a foamed body, and a non-woven fabric body.

In an exemplary embodiment of the present application, there is provided the lithium secondary battery in which thicknesses of the positive electrode and negative electrode current collector layers are 1 $\mu$m or greater and 100 $\mu$m or less and thicknesses of the positive electrode and negative electrode active material layers are 20 $\mu$m or greater and 500 $\mu$m or less.

In an exemplary embodiment of the present application, the positive electrode active material may include one or more selected from the group consisting of a secondary particle positive electrode active material and a single-particle positive electrode active material.

In another exemplary embodiment, the positive electrode active material may include a secondary particle positive electrode active material and a single-particle positive electrode active material.

That is, the positive electrode active material according to the present application uses a mixed positive electrode active material of a secondary particle positive electrode active material and a single-particle positive electrode active material.

The reaction potential of the silicon-based negative electrode is about 0.05 V higher than that of the carbon-based negative electrode, so the silicon-based negative electrode is exposed to high potential. If the secondary particle positive electrode active material is used alone, as cracking occurs at high voltages, the problem of gas generation occurs again. Accordingly, research was conducted on applying a single-particle positive electrode active material as a positive electrode active material. However, if the single-particle positive electrode active material is used alone, the negative electrode no longer functions due to the increased use of the bottom of the silicon-based negative electrode, resulting in poor cycle characteristics. Accordingly, the present application includes both secondary particle and single-particle positive electrode active materials.

In the lithium secondary battery according to the present application, as the positive electrode active material, a high Ni or Mid Ni positive electrode active material is used which includes one or more selected from the group consisting of nickel, cobalt, manganese, and aluminum and includes 50 mol% or more of nickel in all metals except lithium. As a result, a problem occurs in which high-temperature storage gas is generated.

The lithium secondary battery according to the present application uses a mixed positive electrode active material of a secondary particle positive electrode active material and a single-particle positive electrode active material and at the same time limits the ratio of the single-particle positive electrode active material, making it possible to reduce high temperature gas and to ensure cycle performance.

In the present specification, the presence or absence of elements and the contents of elements in the positive electrode active material can be confirmed through ICP analysis, and the ICP analysis may be performed using an inductively coupled plasma atomic emission spectrometer (ICPAES, Perkin-Elmer 7300).

In the present specification, the single-particle positive electrode active material means the smallest particle unit that is distinguished as one lump when a cross section of the positive electrode active material is observed through a scanning electron microscope (SEM), and may consist of one crystal grain, or a plurality of crystal grains.

A method of forming the single-particle positive electrode active material is not particularly limited, but the single-particle positive electrode active material may be generally formed by over-firing with raised firing temperature, or may be manufactured by using additives that help over-firing, by changing a starting material, or the like. The formation with single particles as described above allows for improvement in thermal stability and suppression in increases in side reaction and resistance. The positive electrode active material in the form of a single-particle positive electrode active material may be formed by, for example, adding and mixing a lithium source such as LiOH and $Li_2CO_3$ in a composite transition metal hydroxide including nickel, cobalt, and manganese, and then over-firing the mixture at 800°C to 900°C for 10 hours to 25 hours under an oxygen atmosphere.

In an exemplary embodiment of the present application, the single particle is a term used to distinguish the same from a positive electrode active material particle in a form of a secondary particle resulting from agglomeration of tens to hundreds of primary particles generally used in the related art, and is a concept including a single particle consisting of one primary particle and an agglomerate particle of 10 or less primary particles.

In an exemplary embodiment of the present application, the secondary particle positive electrode active material is the same as described above and may be the same as the single-particle positive electrode active material in terms of type, but may mean a form in which the single-particle positive electrode active material is agglomerated.

In an exemplary embodiment of the present application, the single-particle positive electrode active material may be in the form of a single particle in a commonly used positive electrode active material.

In an exemplary embodiment of the present application, the single-particle positive electrode active material includes one or more selected from the group consisting of nickel, cobalt, manganese, and aluminum, includes 50 mol% or more of nickel in all metals except lithium, and has no H2-H3 phase change at a voltage of 4.0 V or higher.

In an exemplary embodiment of the present application, the single-particle positive electrode active material has no H2-H3 phase change at a voltage of 4.0 V or higher. That is, various adjustment factors are included, but the above phase change is not observed if a content of Ni included together satisfies a value below a certain range. In other words, in general, when a single-particle active material is used, the effect of reducing gas generation is high, but the negative electrode side reaction increases in a high-voltage phase transition section of the positive electrode, leading to rapid deterioration in cycle performance to degrade the performance of the lithium secondary battery. However, especially, by using a single-particle positive electrode active material that does not undergo a specific phase change at high voltage (4.0 V or higher), which is a Mid Ni single-particle positive electrode active material, it is possible to ensure cycle performance while reducing gas generation.

In an exemplary embodiment of the present application, the single-particle positive electrode active material has no H2-H3 phase change at a voltage of 4.0 V or higher. In this case, the physical properties of the single-particle positive electrode active material may mean physical properties having such a feature that, after manufacturing a half cell including the aforementioned single-particle positive electrode active material, does not cause a phase change when applying a voltage of 4.0 V or higher to the half cell.

In an exemplary embodiment of the present application, there is provided the lithium secondary battery in which the single-particle positive electrode active material has no peak 1.5 times or greater of an average value within a voltage range of 4.0 V to 4.3 V when an electrochemical capacity result obtained by charging a positive electrode half cell including the single-particle positive electrode active material to 4.3 V with a constant current is differentiated by a voltage.

In particular, in the case of a conventional single-particle positive electrode material, when the electrochemical capacity result obtained by charging the positive electrode half cell to 4.3 V with a constant current is differentiated by a voltage, a peak is observed within the voltage range of 4.0 V to 4.3 V. However, the single-particle positive electrode active material as described above has no peak observed within the above range, which allows for a gas reduction effect and at the same time further ensures cycle performance.

In an exemplary embodiment of the present application, an average particle diameter (D50) of the single-particle positive electrode active material may be 1 $\mu$m to 10 $\mu$m, and preferably 2 $\mu$m to 7 $\mu$m. That is, the single-particle positive electrode active material may include a small particle form.

In an exemplary embodiment of the present application, the secondary particle positive electrode active material may include a large particle form and a small particle form in a bi-modal form, and an average particle diameter (D50) of the secondary particle positive electrode active material may be 5 $\mu$m to 20 $\mu$m, and preferably 7 $\mu$m to 15 $\mu$m.

In an exemplary embodiment of the present application, there is provided the lithium secondary battery in which an average particle diameter (D50) of the positive electrode active material is 1 $\mu$m or greater and 20 $\mu$m or less.

The average particle diameter of the positive electrode active material corresponds to an overall average particle diameter including the single-particle positive electrode active material and the secondary particle positive electrode active material described above.

In an exemplary embodiment of the present application, there is provided the lithium secondary battery in which the single-particle positive electrode active material is included in an amount of 1 part by weight or more and 50 parts by weight or less and the secondary particle positive electrode active material is included in an amount of 50 parts by weight or more and 99 parts by weight or less based on 100 parts by weight of the positive electrode active material.

In an exemplary embodiment of the present application, the single-particle positive electrode active material may be included in an amount of 1 part by weight or more and 50 parts by weight or less based on 100 parts by weight of the positive electrode active material.

In another exemplary embodiment, the single-particle positive electrode active material may be included in an amount of 1 part by weight or more and 50 parts by weight or less, preferably 5 parts by weight or more and 50 parts by weight or less, and more preferably 15 parts by weight or more and 50 parts by weight or less based on 100 parts by weight of the positive electrode active material.

In an exemplary embodiment of the present application, the secondary particle positive electrode active material may be included in an amount of 50 parts by weight or more and 99 parts by weight or less, preferably 50 parts by weight or more and 95 parts by weight or less, and more preferably 50 parts by weight or more and 85 parts by weight or less based on 100 parts by weight of the positive electrode active material.

As described above, the positive electrode according to the present application uses a mixed positive electrode material of secondary particles and single particles, and has a feature of reducing the high-temperature storage gas generated from the positive electrode material. If the single-particle positive electrode active material according to the present application is used beyond the above range, the high-temperature storage gas can be reduced, but cycle performance is deteriorated, resulting in a rapid decrease in life characteristics.

The positive electrode active material according to the present application is characterized in that the ratio of the single particle and the secondary particle is adjusted as described above and the part by weight of the silicon-based active material, which is used for a counter electrode, is also adjusted.

That is, in an exemplary embodiment of the present application, there is provided the lithium secondary battery in which a capacity loading amount of the positive electrode active material layer composition is 2 mAh/cm$^2$ or more and 5 mAh/cm$^2$ and the single-particle positive electrode active material is included in an amount of 0.01 part by weight or more and 4 parts by weight or less based on 100 parts by weight of the silicon-based active material.

In another exemplary embodiment, the capacity loading amount of the positive electrode active material layer composition may be 2 mAh/cm$^2$ or more and 5 mAh/cm$^2$, and the single-particle positive electrode active material may be included in an amount of 0.01 part by weight or more and 4 parts by weight or less, and preferably 0.03 part by weight or more and 3.9 parts by weight or less based on 100 parts by weight of the silicon-based active material.

Based on the capacity loading amount of the positive electrode as described above, the single-particle positive electrode active material as described above is included relative to 100 parts by weight of the silicon-based active material. Simply adjusting the weight ratio of the single-particle positive electrode active material in the positive electrode active material as described above did not solve the problem of life characteristics due to the volume expansion of the silicon-based negative electrode (especially pure Si) used as a counter electrode. However, adjusting the ratio of the single-particle positive electrode active material relative to the silicon-based active material as described above allows for provision of a lithium secondary battery with reduced gas generation and particularly excellent life characteristics, which is the main purpose of the present invention.

In an exemplary embodiment of the present application, there is provided the lithium secondary battery in which the single-particle positive electrode active material and the secondary particle positive electrode active material include one or more selected from the group consisting of $LiNi_xCo_yMn_zO_2$ (x+y+z=1); $LiNi_aCo_bMn_cAl_dO_2$ (a+b+c+d=1); $LiMn_2O_4$; $LiNi_{0.5}Mn_{1.5}O_2$; and $LiM_xFe_yPO_4$ (M: transition metal, x+y=1).

In an exemplary embodiment of the present application, there is provided the lithium secondary battery in which the single-particle positive electrode active material and the secondary particle positive electrode active material are a nickel-cobalt-manganese (NCM) oxide, or a nickel-cobalt-manganese-aluminum (NCMA) oxide and nickel included in the nickel-cobalt-manganese (NCM) oxide and nickel-cobalt-manganese-aluminum (NCMA) oxide is included in an amount of 50 mol% or more in all metals except lithium.

In another exemplary embodiment, the single-particle positive electrode active material and the secondary particle positive electrode active material may be a nickel-cobalt-manganese (NCM) oxide, or a nickel-cobalt-manganese-aluminum (NCMA) oxide and nickel included in the nickel-cobalt-manganese (NCM) oxide and nickel-cobalt-manganese-aluminum (NCMA) oxide may be included in an amount of 50 mol% or more, preferably 55 mol% or more, more preferably 58 mol% or more, and most preferably 60 mol% or more in all metals except lithium. In addition, the content of nickel (Ni) may be 99 mol% or less, or 95 mol% or less, based on all metals.

When the content of nickel is less than the above range, a content of cobalt increases to increase thermal stability. However, the capacity of the positive electrode active material is reduced, thereby causing a problem in that the positive electrode active material cannot be applied to an electrochemical device requiring a high capacity.

On the other hand, as the content of nickel is higher within the above range, the lithium secondary battery including the same may exhibit higher capacity characteristics. However, as the content of nickel increases, the content of cobalt and/or manganese relatively decreases, and accordingly, thermal stability may be lowered. Therefore, the efficiency of the lithium secondary battery according to the present application may be maximized when the content of nickel is within the above range.

In an exemplary embodiment of the present application, the nickel-cobalt-manganese (NCM) oxide may be represented as lithium nickel-cobalt-manganese oxide as follows, and lithium nickel-cobalt-manganese (NCM) oxide is a Ni-Co-Mn 3-component system positive electrode active material represented by $Li_{1+x}(Ni_aCo_bMn_c)O_2$ ($0.97 \leq x \leq 1.06$, 0<a<1, 0<b<1, 0<c<1, a+b+c=1), a Ni-Co-Mn 3-component system positive electrode active material represented by $Li_{1+x}(Ni_aCo_bMn_c)O_4$ ($0.97 \leq x \leq 1.06$, 0<a<2, 0<b<2, 0<c<2, a+b+c=2) or a mixture thereof, and is a composite body made to combine features such as high capacity of a nickel-containing oxide, thermal stability of a manganese-containing oxide and excellent electrochemical characteristics of a cobalt-containing oxide. The lithium nickel-cobalt-manganese (NCM) oxide may be doped with a small amount of a metal element to the extent that satisfies the purpose of the present invention. For example, each of the lithium nickel-cobalt-manganese (NCM) oxide represented by a Ni-Co-Mn 3-component system positive electrode active material represented by $Li_{1+x}(Ni_aCo_bMn_c)O_2$ ($0.97 \leq x \leq 1.06$, 0<a<1, 0<b<1, 0<c<1, a+b+c=1) or $Li_{1+x}(Ni_aCo_bMn_c)O_4$ ($0.97 \leq x \leq 1.06$, 0<a<2, 0<b<2, 0<c<2, a+b+c=2) may be independently doped with one or two or more metals selected from the group consisting of Na, K, Mg, Ca, Sr, Ni, Co, Ti, Al, Si, Sn, Mn, Cr, Fe, V and Zr, as a nonlimiting example.

The amount of the metal doped into the lithium nickel-cobalt-manganese (NCM) may be within a range that does not significantly increase positive electrode resistance. For example, the doping metal in lithium nickel-cobalt-manganese (NCM) oxide may be within a range of 10 to 1500 ppm, 50 to 1000 ppm, or 100 to 500 ppm based on each element, but is not limited thereto. As a nonlimiting example, lithium nickel-cobalt-manganese (NCM) oxide generally uses 2 to 3 elements as the doping metals, and the doping metals may be present in an amount of hundreds of ppm based on each element.

In an exemplary embodiment of the present application, the content of nickel included in the nickel-cobalt-manganese (NCM) oxide may be 50 mol% or more, specifically 55 mol% or more, more specifically 58 mol% or more, and further specifically 60 mol% or more in all metals except lithium.

In the Formula represented by $Li_{1+x}(Ni_aCo_bMn_c)O_2$ (0.97≤x≤1.06, 0<a<1, 0<b<1, 0<c<1, a+b+c=1), the content of nickel may mean a ratio of a included. That is, in the case of a 3-component system, it may mean a ratio of nickel among metals of nickel, cobalt, and manganese.

In an exemplary embodiment of the present application, the nickel-cobalt-manganese-aluminum (NCMA) oxide may be represented as lithium nickel-cobalt-manganese-aluminum oxide as follows, and lithium nickel-cobalt-manganese-aluminum (NCMA) oxide is a Ni-Co-Mn-Al 4-component system positive electrode active material represented by $Li_{1+x}(Ni_aCo_bMn_cAl_d)O_2$ (0.97≤x≤1.06, 0<a<1, 0<b<1, 0<c<1, 0<d<1 a+b+c+d=1), a Ni-Co-Mn-Al 4-component system positive electrode active material represented by $Li_{1+x}(Ni_aCo_bMn_cAl_d)O_4$ (0.97≤x≤1.06, 0<a<2, 0<b<2, 0<c<2, 0<d<2 a+b+c+d=2) or a mixture thereof, and is a composite body made to combine features such as high capacity of a nickel-containing oxide, thermal stability of a manganese-containing oxide and excellent electrochemical characteristics of a cobalt-containing oxide. The lithium nickel-cobalt-manganese-aluminum (NCMA) oxide may be doped with a small amount of a metal element to the extent that satisfies the purpose of the present invention.

For example, each of the lithium nickel-cobalt-manganese (NCM) represented by Ni-Co-Mn-Al 4-component system positive electrode active material represented by $Li_{1+x}(Ni_aCo_bMn_cAl_d)O_2$ (0.97≤x≤1.06, 0<a<1, 0<b<1, 0<c<1, 0<d<1 a+b+c+d=1) or $Li_{1+x}(Ni_aCo_bMn_cAl_d)O_4$ (0.97≤x≤1.06, 0<a<2, 0<b<2, 0<c<2, 0<d<2 a+b+c+d=2) may be independently doped with one or two or more metals selected from the group consisting of Na, K, Mg, Ca, Sr, Ni, Co, Ti, Al, Si, Sn, Mn, Cr, Fe, V and Zr, as a non-limiting example.

In an exemplary embodiment of the present application, the content of nickel included in the nickel-cobalt-manganese-aluminum (NCMA) oxide may be 80 mol% or more, specifically 85 mol% or more, more specifically 88 mol% or more, and further specifically 93 mol% or more in all metals except lithium.

In the Formula represented by $Li_{1+x}(Ni_aCo_bMn_cAl_d)O_2$ (0.97≤x≤1.06, 0<a<1, 0<b<1, 0<c<1, 0<d<1 a+b+c+d=1), the content of nickel may mean a ratio of a included. That is, in the case of a 4-component system, the content of nickel may mean a ratio of nickel among metals of nickel, cobalt, manganese, and aluminum.

In an exemplary embodiment of the present application, there is provided the lithium secondary battery in which the positive electrode active material is included in an amount of 90 parts by weight or more based on 100 parts by weight of the positive electrode active material layer composition.

In another exemplary embodiment, the positive electrode active material may be included in an amount of 90 parts by weight or more, preferably 93 parts by weight or more, and more preferably 95 parts by weight or more, and 99 parts by weight or less or 98 parts by weight or less based on 100 parts by weight of the positive electrode active material layer composition.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in one embodiment of the present application, there is provided the lithium secondary battery in which the positive electrode conductive material includes a single-walled carbon nanotube (SWCNT), or a multi-walled carbon nanotube (MWCNT), and is included in an amount of 0.1 part by weight or more and 2 parts by weight or less based on 100 parts by weight of the positive electrode active material layer composition.

In another exemplary embodiment, the positive electrode conductive material may be included in an amount of 0.1 part by weight or more and 2 parts by weight or less, preferably 0.3 part by weight or more and 1.5 parts by weight or less, and more preferably 0.5 part by weight or more and 1.2 parts by weight or less based on 100 parts by weight of the positive electrode active material layer composition.

In addition, the positive electrode binder serves to improve bonding between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

In this case, the positive electrode binder may be included in an amount of 0.1 part by weight or more and 10 parts by weight or less, and preferably 1 part by weight or more and 5 parts by weight or less based on 100 parts by weight of the positive electrode composition.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolyte as well as a low resistance to the migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

In the present application, examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Mode for Invention

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**(1) Preparation of Positive Electrode**

The positive electrode active material, the positive electrode conductive material (LB. CNT), and the binder (PVdF, KF9700) in Table 1 below were added to a solvent (N-methylpyrrolidone, NMP) at a weight ratio of 97.0:1.56:1.44 to prepare a positive electrode slurry. The positive electrode slurry was applied to an aluminum (Al) thin film having a thickness of 12 $\mu$m, which was a positive electrode current collector, dried, and then roll-pressed to prepare a positive electrode. In this case, the capacity loading amount of the positive electrode is as shown in Table 1 below.

[Table 1]

|  | Single- particle positive electrode active material (parts by weight) | Secondary particle positive electrode active material (parts by weight) | Capacity loading amount of positive electrode (mAh/cm$^2$) | Parts by weight of single-particle positive electrode active material relative to 100 parts by weight of silicon-based active material |
|---|---|---|---|---|
| Example 1 | Single particle A 50 parts by weight | Secondary particle A 50 parts by weight | 4.5 | 3.7 |
| Example 2 | Single particle A 50 parts by weight | Secondary particle A 50 parts by weight | 3.5 | 2.9 |
| Example 3 | Single particle A 20 parts by weight | Secondary particle A 80 parts by weight | 4.5 | 1.5 |
| Example 4 | Single particle B 50 parts by weight | Secondary particle A 50 parts by weight | 4.5 | 3.7 |
| Example 5 | Single particle C 50 parts by weight | Secondary particle A 50 parts by weight | 4.5 | 3.7 |
| Comparative Example 1 | Single particle A 100 parts by weight | - | 4.5 | 6 |
| Comparative Example 2 | Single particle A 55 parts by weight | Secondary particle A 45 parts by weight | 4.5 | 4.5 |
| Comparative Example 3 | Single particle A 0.1 part by weight | Secondary particle A 99.9 parts by weight | 4.5 | 0.007 |

In Table 1 above, the parts by weight of the single-particle positive electrode active material and the secondary particle positive electrode active material are shown based on 100 parts by weight of the entire positive electrode active material.

In Table 1 above, the single particle A is Li($Ni_aCo_bMn_cAl_d$)$O_2$ in which NCMA excluding lithium (Li) and oxygen ($O_2$) had a ratio of Ni:Co:Mn:Al=86:5:8:1, satisfying the ratio (a:b:c:d=0.86:0.05:0.08:0.01).

In Table 1 above, the secondary particle A is Li($Ni_aCo_bMn_cAl_d$)$O_2$ in which NCMA excluding lithium (Li) and oxygen ($O_2$) had a ratio of Ni:Co:Mn:Al=86:5:7:2, satisfying the ratio (a:b:c:d=0.86:0.05:0.07:0.02).

In Table 1 above, the single particle B is Li($Ni_aCosMn_c$)$O_2$ in which NCM(A) excluding lithium (Li) and oxygen ($O_2$) had a ratio of Ni:Co:Mn=86:8:6, satisfying the ratio (a:b:c=0.86:0.08:0.06).

In Table 1 above, the single particle C is Li($Ni_aCo_bMn_c$)$O_2$ in which NCM excluding lithium (Li) and oxygen ($O_2$) of the single-particle positive electrode active material had a ratio of Ni:Co:Mn=60:20:20, satisfying the ratio (a:b:c=0.60:0.20:0.20). In this case, in the case of the single particle C, it was confirmed that no H2-H3 phase change was observed, and there was no peak 1.5 times or greater of an average value within a voltage range of 4.0 V to 4.3 V when an electrochemical capacity result obtained by charging a positive electrode half cell including the single particle C to 4.3 V with a constant current was differentiated by a voltage.

## (2) Preparation of Negative Electrode

A negative electrode active material layer composition was prepared using Si (average particle diameter (D50): 5 $\mu$m) as a silicon-based active material, a first conductive material, a second conductive material, and polyacrylamide as a binder at a weight ratio of 80:9.6:0.4:10. A negative electrode slurry (solid concentration: 28 wt%) was prepared by adding the composition to distilled water as a solvent for formation of a negative electrode slurry.

The first conductive material was plate-like graphite (specific surface area: 17 $m^2$/g, average particle diameter (D50): 3.5 $\mu$m), and the second conductive material was carbon nanotubes.

As a mixing method, the first conductive material, the second conductive material, the binder and water were dispersed at 2500 rpm for 30 minutes by using a homo mixer, the active material was added thereto, and the resultant mixture was dispersed at 2500 rpm for 30 minutes to fabricate a slurry.

The negative electrode slurry was coated on both surfaces of a copper current collector (thickness: 8 $\mu$m) serving as a negative electrode current collector with a loading amount of 3.00 mg/ $cm^2$, which was then roll-pressed and dried in a vacuum oven at 130°C for 10 hours to form a negative electrode active material layer (thickness: 23 $\mu$m).

## (3) Preparation of Secondary Battery

An electrode assembly was prepared by interposing a compression-resistant thin film separator (PE 12 um) with ceramic coating 4 um/4 um between the positive electrode and the negative electrode. After placing the electrode assembly inside a case, an electrolyte was injected into the case to prepare a lithium secondary battery.

## Experimental Example 1: Life Evaluation

For the lithium secondary batteries including the negative electrodes prepared in the Examples and Comparative Examples, the life and capacity retention rate were evaluated using an electrochemical charging and discharging device. The in-situ cycle test was conducted on the secondary battery at 4.2-3.27 V 1 C/1 C, and during the test, 0.33 C/0.33 C charging/discharging (4.2-3.11 V) was performed every 120 cycles to measure the capacity retention rate, and results thereof are listed in Table 2.

life retention rate (%) = {(discharge capacity in the Nth cycle)/(discharge capacity in the first cycle)} $\times$ 100

## Experimental Example 2: Evaluation of Resistance Increase Rate Measurement

In Experimental Example 1, during the test, the capacity retention rate was measured by charging/discharging (4.2-3.11V) the battery at 0.33C/0.33C every 120 cycles, and then the resistance increase rate was compared and analyzed by discharging the battery with a pulse of 2.5C at SOC50 to measure the resistance. Results are shown in Table 2 below.

## Experimental Example 3: Evaluation of Amount of Gas Generation from Fully Charged Positive Electrode

After fully charging the 1Ah cells prepared in the Examples and Comparative Examples, the cells were stored in an oven at 60°C for 8 weeks. Then, the amounts of gas generation were confirmed and compared using a gas chromatography (GC) method, and the results are shown in Table 2 below.

[Table 2]

| | Capa. Retention @600cycle 0.33C/0.33C, 4.2-3.11V @25°C | Resistance Increase % @600cycle (SOC50) | Gas volume after storage test ($\mu$L) |
|---|---|---|---|
| Example 1 | 84.1 | 5.8 | 4186 |
| Example 2 | 83.3 | 6.1 | 4144 |
| Example 3 | 83.8 | 5.4 | 4425 |
| Example 4 | 83.1 | 7.9 | 4217 |
| Example 5 | 85.5 | 5.2 | 4026 |

(continued)

|  | Capa. Retention @600cycle 0.33C/0.33C, 4.2-3.11V @25°C | Resistance Increase % @600cycle (SOC50) | Gas volume after storage test ($\mu$L) |
|---|---|---|---|
| Comparative Example 1 | 75.5 | 45.3 | 3725 |
| Comparative Example 2 | 80.1 | 10.9 | 4100 |
| Comparative Example 3 | 83.7 | 12.0 | 4707 |

As can be seen in Tables 1 and 2 above, it could be confirmed that the lithium secondary battery according to the present application in which the aforementioned parts by weight of the single-particle positive electrode active material was applied to the positive electrode could reduce the amount of gas generation, and the higher the content of the single-particle positive electrode active material, the further reduced the amount of gas generation. However, it could be confirmed that the higher the blending ratio of the single-particle positive electrode active material, the poorer the cycle performance, and that when the content of the single-particle positive electrode active material exceeded a certain content, as in Comparative Example 1 and Comparative Example 2, the life performance was sharply degraded. In addition, in the case of Comparative Example 3 in which the content of the single-particle positive electrode active material was below the range of the present application, as in Comparative Example 1, it could be confirmed that the amount of gas generation was large and the cycle performance was degraded.

**Claims**

1. A lithium secondary battery comprising:

   a positive electrode;
   a silicon-based negative electrode;
   a separator provided between the positive electrode and the negative electrode; and
   an electrolyte,
   wherein the positive electrode comprises a positive electrode current collector layer and a positive electrode active material layer comprising a positive electrode active material layer composition provided on one surface or both surfaces of the positive electrode current collector layer,
   wherein the silicon-based negative electrode comprises a negative electrode current collector layer and a negative electrode active material layer comprising a negative electrode active material layer composition provided on one surface or both surfaces of the negative electrode current collector layer,
   wherein the negative electrode active material layer composition comprises a silicon-based active material, and the silicon-based active material comprises one or more selected from the group consisting of $SiO_x$ (x=0), $SiO_x$ (0<x<2), SiC, and a Si alloy,
   wherein the positive electrode active material layer composition comprises a positive electrode active material comprising one or more selected from the group consisting of a secondary particle positive electrode active material and a single-particle positive electrode active material,
   wherein the positive electrode active material comprises one or more selected from the group consisting of nickel, cobalt, manganese, and aluminum, and comprises 50 mol% or more of nickel in all metals except lithium,
   wherein the single-particle positive electrode active material is included in an amount of 1 part by weight or more and 50 parts by weight or less based on 100 parts by weight of the positive electrode active material,
   wherein a capacity loading amount of the positive electrode active material layer composition is 2 mAh/cm$^2$ or more and 5 mAh/cm$^2$, and
   wherein the single-particle positive electrode active material is included in an amount of 0.01 part by weight or more and 4 parts by weight or less based on 100 parts by weight of the silicon-based active material.

2. The lithium secondary battery of claim 1, wherein the silicon-based active material comprises one or more selected from the group consisting of $SiO_x$ (x=0), $SiO_x$ (0<x<2), and a metal impurity, and comprises 70 parts by weight or more of $SiO_x$ (x=0) based on 100 parts by weight of the silicon-based active material.

3. The lithium secondary battery of claim 1, wherein the silicon-based active material is included in an amount of 60 parts by weight or more based on 100 parts by weight of the negative electrode active material layer composition.

4. The lithium secondary battery of claim 1, wherein the single-particle positive electrode active material and the secondary particle positive electrode active material comprise one or more selected from the group consisting of $LiNi_xCo_yMn_zO_2$ (x+y+z=1); $LiNi_aCo_bMn_cAl_dO_2$ (a+b+c+d=1); $LiMn_2O_4$; $LiNi_{0.5}Mn_{1.5}O_2$; and $LiM_xFe_yPO_4$ (M: transition metal, x+y = 1).

5. The lithium secondary battery of claim 1, wherein the single-particle positive electrode active material and the secondary particle positive electrode active material are a nickel-cobalt-manganese (NCM) oxide, or a nickel-cobalt-manganese-aluminum (NCMA) oxide, and
wherein nickel included in the nickel-cobalt-manganese (NCM) oxide and nickel-cobalt-manganese-aluminum (NCMA) oxide is included in an amount of 50 mol% or more in all metals except lithium.

6. The lithium secondary battery of claim 1, wherein an average particle diameter (D50) of the positive electrode active material is 1 $\mu$m or greater and 20 $\mu$m or less.

7. The lithium secondary battery of claim 1, wherein the positive electrode active material is included in an amount of 90 parts by weight or more based on 100 parts by weight of the positive electrode active material layer composition.

8. The lithium secondary battery of claim 1, wherein the single-particle positive electrode active material is included in an amount of 1 part by weight or more and 50 parts by weight or less and the secondary particle positive electrode active material is included in an amount of 50 parts by weight or more and 99 parts by weight or less based on 100 parts by weight of the positive electrode active material.

9. The lithium secondary battery of claim 1, wherein thicknesses of the positive electrode and negative electrode current collector layers are 1 $\mu$m or greater and 100 $\mu$m or less, and
wherein thicknesses of the positive electrode and negative electrode active material layers are 20 $\mu$m or greater and 500 $\mu$m or less.

10. The lithium secondary battery of claim 1, wherein the single-particle positive electrode active material has no H2-H3 phase change at a voltage of 4.0 V or higher.

11. The lithium secondary battery of claim 1, wherein the single-particle positive electrode active material has no peak 1.5 times or greater of an average value within a voltage range of 4.0 V to 4.3 V when an electrochemical capacity result obtained by charging a positive electrode half cell comprising the single-particle positive electrode active material to 4.3 V with a constant current is differentiated by a voltage.

[Figure 1]

## INTERNATIONAL SEARCH REPORT

| International application No. |
|---|
| **PCT/KR2023/021552** |

### A. CLASSIFICATION OF SUBJECT MATTER

**H01M 4/134**(2010.01)i; **H01M 4/38**(2006.01)i; **H01M 4/48**(2010.01)i; **H01M 4/587**(2010.01)i; **H01M 4/36**(2006.01)i; **H01M 4/525**(2010.01)i; **H01M 4/505**(2010.01)i; **H01M 4/58**(2010.01)i; **H01M 4/131**(2010.01)i; **H01M 4/133**(2010.01)i

According to International Patent Classification (IPC) or to both national classification and IPC

### B. FIELDS SEARCHED

Minimum documentation searched (classification system followed by classification symbols)

H01M 4/134(2010.01); H01M 10/052(2010.01); H01M 4/02(2006.01); H01M 4/36(2006.01); H01M 4/38(2006.01); H01M 4/48(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 실리콘계 음극(silicon-based anode), 이차입자(secondary particle), 단입자(single particle)

### C. DOCUMENTS CONSIDERED TO BE RELEVANT

| Category* | Citation of document, with indication, where appropriate, of the relevant passages | Relevant to claim No. |
|---|---|---|
| A | KR 10-2019-0131842 A (LG CHEM, LTD.) 27 November 2019 (2019-11-27)<br>See paragraphs [0031], [0105], [0120], [0122], [0125] and [0127]; and claims 1 and 7. | 1-11 |
| A | JP 2022-064294 A (SHINSHU UNIVERSITY et al.) 25 April 2022 (2022-04-25)<br>See paragraphs [0028], [0056]-[0058], [0061]-[0062] and [0072]; and claim 1. | 1-11 |
| A | KR 10-1210190 B1 (SONY CORPORATION) 07 December 2012 (2012-12-07)<br>See entire document. | 1-11 |
| A | KR 10-2022-0067478 A (TOYOTA JIDOSHA KABUSHIKI KAISHA) 24 May 2022 (2022-05-24)<br>See entire document. | 1-11 |
| A | KR 10-2344365 B1 (SAMSUNG SDI CO., LTD.) 28 December 2021 (2021-12-28)<br>See entire document. | 1-11 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 April 2024** | **15 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/021552**

| Patent document cited in search report | | | Publication date (day/month/year) | Patent family member(s) | | | Publication date (day/month/year) |
|---|---|---|---|---|---|---|---|
| KR | 10-2019-0131842 | A | 27 November 2019 | CN | 111819718 | A | 23 October 2020 |
| | | | | EP | 3751646 | A1 | 16 December 2020 |
| | | | | EP | 3751646 | A4 | 21 April 2021 |
| | | | | JP | 2021-516424 | A | 01 July 2021 |
| | | | | JP | 7139008 | B2 | 20 September 2022 |
| | | | | KR | 10-2022-0132491 | A | 30 September 2022 |
| | | | | KR | 10-2539694 | B1 | 02 June 2023 |
| | | | | US | 2021-0135187 | A1 | 06 May 2021 |
| | | | | WO | 2019-221497 | A1 | 21 November 2019 |
| JP | 2022-064294 | A | 25 April 2022 | CN | 116368638 | A | 30 June 2023 |
| | | | | EP | 4231375 | A1 | 23 August 2023 |
| | | | | JP | 7148937 | B2 | 06 October 2022 |
| | | | | US | 2023-0238521 | A1 | 27 July 2023 |
| | | | | WO | 2022-080108 | A1 | 21 April 2022 |
| KR | 10-1210190 | B1 | 07 December 2012 | KR | 10-2006-0058646 | A | 30 May 2006 |
| | | | | US | 2007-0207386 | A1 | 06 September 2007 |
| | | | | US | 7700235 | B2 | 20 April 2010 |
| KR | 10-2022-0067478 | A | 24 May 2022 | CN | 114512636 | A | 17 May 2022 |
| | | | | JP | 2022-079934 | A | 27 May 2022 |
| | | | | JP | 7334711 | B2 | 29 August 2023 |
| | | | | US | 2022-0238922 | A1 | 28 July 2022 |
| KR | 10-2344365 | B1 | 28 December 2021 | KR | 10-2020-0133704 | A | 30 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220186055
- KR 1020220186066

- JP 2009080971 A